(19) Europäisches Patentamt
European Patent Office
Office européen des brevets

(11) Publication number: 0 335 458 A1

# (12) EUROPEAN PATENT APPLICATION

(21) Application number: 89200751.9

(22) Date of filing: 23.03.89

(51) Int. Cl.[4]: C09J 3/12 , B32B 27/18

(30) Priority: 28.03.88 US 173906
09.06.88 US 206958

(43) Date of publication of application:
04.10.89 Bulletin 89/40

(84) Designated Contracting States:
AT BE CH DE ES FR GB GR IT LI NL SE

(71) Applicant: THE DOW CHEMICAL COMPANY
2030 Dow Center Abbott Road P.O. Box 1967
Midland Michigan 48640-1967(US)

(72) Inventor: Makati, Ashok C.
705 Chapel Lane
Midland Michigan 48640(US)
Inventor: Kan, Charles S.
1110 Sylvan Lane
Midland Michigan 48640(US)

(74) Representative: Smulders, Theodorus A.H.J., Ir. et al
Vereenigde Octrooibureaux Nieuwe Parklaan 107
NL-2587 BP 's-Gravenhage(NL)

## (54) Latex-based adhesives, laminates and process for preparing the laminates.

(57) The present invention is an adhesive primarily for use in laminate structures which are exposed to highly humid conditions. The adhesive is a polymeric latex-based system to which a polymeric adhesion promoter like polyamidoamine and an epoxy emulsion are added. The adhesive retains bond strength when exposed to humidity. The scope of the invention also includes laminate structures prepared with the present adhesive and other substrate layered structures which utilize the adhesive.

EP 0 335 458 A1

Xerox Copy Centre

# LATEX-BASED ADHESIVES, LAMINATES AND PROCESS FOR PREPARING THE LAMINATES

The present invention relates to polymeric latex-based adhesives which contain a polymeric adhesion promoter and epoxy emulsion to be used to laminate various substrates, such as plastic films.

Multilayer films are presently used in various types of packaging. Food items in particular are packaged in multilayer film packages. Individual films having different properties contribute those properties to the multilayer structure. For example, one film may have particularly good oxygen barrier properties while another may have excellent tensile strength.

The multilayer structure can be manufactured by adhesive lamination, coextrusion or extrusion lamination. The preferred multilayer structure of the present invention is manufactured by adhesive lamination. Typically films are laminated to each other by coating the primary film or web with an adhesive. The secondary web is then laminated to the primary web after the adhesive is dried.

Multilayer films are used in the food packaging industry for packaging various foodstuffs such as snack food, and processed meat and cheese. These meat and cheese packages are often exposed to high humidity. Therefore a retention of bond strength in high humidity is a desirable property in the laminated structure.

Solvent-based adhesives which impart strong bond retention between substrates in high humidity are normally used in adhering most plastic film to plastic films and other substrates. The good bond strength occurs with time, typically with a crosslinking reaction in the adhesive. Since the crosslinking does not occur instantaneously, the green strength (initial strength) of the bond could be poor and therefore undesirable. Such systems also result in difficult handling of the adhesive because the pot-life of such systems is relatively short.

The additional disadvantage to using solvent-based adhesives is solvent emission. The increasing governmental control over solvent emissions has necessitated an alternative to such adhesives.

Other known adhesives in addition to the solvent-based adhesives are latex-based laminating adhesives which normally contain a wetting agent and a crosslinking agent. These systems typically have similar disadvantages to the solvent-based systems, i.e. a short pot-life and insufficient green strength. The latex-based adhesives also contain hydrophilic additives which impart wetting properties and latex stability. However, humidity will also weaken such latex-based adhesive bonds.

In view of these disadvantages of present adhesive systems, it is desirable to provide an efficient latex aqueous adhesive to bond plastic substrates, such as plastic film to plastic films, to paper board and other substrates without sacrificing the initial strength of the bond or the strength of the bond after an elapsed period of time in both dry and humid environments and without sacrificing the pot-life of the adhesive.

Accordingly, the present invention is such an adhesive formulation for substrates which provides a bond between a substrate and another substrate of the same or different material which comprises: (i) a polymeric latex; (ii) at least one polymeric adhesion promoter present in an amount sufficient to promote adherence of the surface of the substrate to the surface of another substrate of the same or different material; and (iii) an epoxy emulsion in an amount sufficient to improve adherence of the surface of the substrate to the surface of another substrate of the same or different material under humid conditions; whereby the adhesive formulation comprising (i), (ii) and (iii) provides an increase in percent retention between dry strength and wet strength of the bond over an adhesive formulation which does not comprise (i), (ii) and (iii).

The present invention also provides for a laminate structure for substrates prepared with an adhesive formulation which comprises: (i) a polymeric latex; (ii) at least one polymeric adhesion promoter present in an amount sufficient to promote adherence of the surface of a substrate to the surface of another substrate of the same or different material; and (iii) an epoxy emulsion in an amount sufficient to improve adherence of the surface of the substrate or film to the surface of another substrate or film of the same or different material under humid conditions; whereby the adhesive formulation comprising (i), (ii) and (iii) provides an increase in percent retention between dry strength and wet strength of the bond over an adhesive formulation which does not comprise (i), (ii) and (iii).

The present invention also provides for a process for preparing a laminate structure which comprises;

(a) providing a substrate having at least one major surface;

(b) applying to the major surface a latex adhesive comprising an adhesive formulation as described previously; and

(c) laminating the adhesive-coated substrate to another substrate of the same or different material.

Applicants have also discovered that the adhesive of the present invention can coagulate in hard water

and cause difficulty in maintenance of processing equipment. Therefore, the present invention also provides for the addition to the adhesive of an effective amount of a surfactant whereby coagulation of the adhesive in water containing ions is inhibited.

## Substrates

The term "substrate" means any solid material having a surface which can be adhered to a complimentary surface of another substrate of the same or different material with the present latex-based adhesive composition. The term substrate is inclusive of any type of naturally occurring and synthetic solid materials. Representative examples of such solid materials and their forms include the following: plastic, plastic film, paper, paperboard, fabrics, glass, ceramic, metal, foil, metalized plastic film, or most any other solid in the form of a film, sheet, board or block.

The term "films" is inclusive of all conventional plastic films, for example, polyolefin films, such as polypropylene and polyethylene as well as polyester film or polyamide film.

Films generally have low energy surfaces and are difficult to adhere to other substrates. Therefore, the surfaces are normally activated by flame oxidation, corona discharge, or chemical etching or primer coatings in an attempt to improve adhesion.

The term "laminate" as used herein, is meant to include structures which are manufactured by lamination, using the present adhesive formulation comprising polymeric latex, epoxy emulsion and polymeric adhesion promoter as the laminating adhesive. A laminate structure is typically comprised of substrates of the same or different material which are laminated to each other. The film laminate structure typically comprised of films which are laminated to each other by coating the primary film or web with the present adhesive. The secondary web is then laminated to the primary web after the adhesive is dried.

## Polymeric Latex

The homopolymer or copolymer latexes to be used in a laminating adhesive system of the present invention can be prepared from a variety of monomers which include monovinyl aromatic monomer, aliphatic conjugated diene monomer, acrylate monomer, vinylidene halide or vinyl halide monomer, vinyl esters of carboxyl acids containing from 1 to 18 carbon atoms, such as vinyl acetate or vinyl stearate, methacrylonitrile and acrylonitrile. Optionally a monoethylenically unsaturated carboxylic acid monomer could be used. Crosslinking monomers such as divinylbenzene, ethylene glycol dimethacrylate and allyl methacrylate could also be used.

The term "monovinyl aromatic monomer", as used herein, is meant to include those monomers with a radical of the formula

$$CH_2=\overset{\displaystyle R}{\overset{|}{C}}-$$

(wherein R is hydrogen or a lower alkyl such as an alkyl having from 1 to 4 carbon atoms) attached directly to an aromatic nucleus containing from 6 to 10 carbon atoms, including those wherein the aromatic nucleus is substituted with alkyl or halogen substituents. The preferred monomers are styrene and vinyltoluene.

The term "aliphatic conjugated diene", as used herein, is meant to include compounds such as 1,3-butadiene, 2-methyl-1,3-butadiene, piperylene (1,3-pentadiene), and other hydrocarbon analogs of 1,3-butadiene.

"Vinylidene halides" and "vinyl halides" suitable for this invention include vinylidene chloride and vinyl chloride, which are highly preferred. Vinylidene bromides and vinyl bromide can also be employed.

The term "acrylate", as used herein, is meant to include the acrylate or methacrylate monomers. Additionally, the acrylates can include acids, esters, amides, and substituted derivatives thereof. Generally, the preferred acrylates are $C_1$-$C_8$ alkyl acrylates or methacrylates. Examples of such acrylates include butyl acrylate, hexyl acrylate, tert-butyl acrylate, methylmethacrylate, butylmethacrylate, hexylmethacrylate, isobutylmethacrylate, and isopropylmethacrylate. The preferred acrylates are butyl acrylate and methylmethacrylate.

The term "monoethylenically unsaturated carboxylic acid monomer", as used herein, is meant to include those monocarboxylic monomers such as acrylic acid, and methacrylic acid; dicarboxylic monomers such as itaconic acid, fumaric acid, maleic acid, and their monoesters.

The chain transfer agent that could be employed with the latex to produce laminating adhesive includes bromoform, carbon tetrachloride, alkyl mercaptans or other suitable known chain transfer agents for a given

monomer composition. Of these alkyl mercaptans are most preferred. Examples of some mercaptans are n-octyl, n-dodecyl, t-octyl, t-dodecyl mercaptan and so forth and mixtures thereof.

The latexes of the present invention can be prepared by conventional emulsion polymerization.

The latex is normally present in an amount of from at least 70 to 99 percent by weight of the total latex adhesive.

Polymeric adhesion promoter

"Polymeric adhesion promoters" typically employable in the present invention include cationic polymers containing an $NH_x$ group such as polyamidoamine wherein x is from 1 to 2. The polyamidoamine can be a branched compound, a linear or crosslinked compound or a polyamide or polyamido resin such as is indicated by the following structures.

Linear

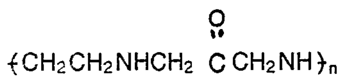

Branched

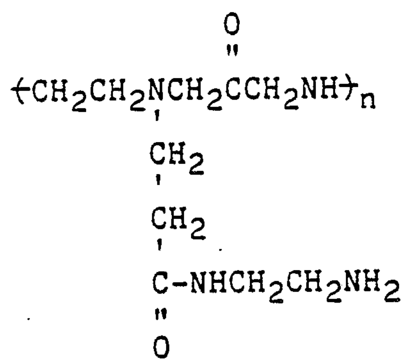

Crosslinked

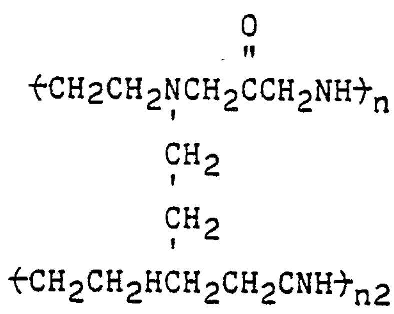

Polyamide

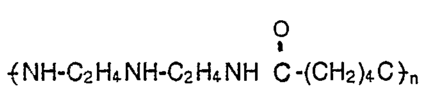

Polyamido Resin

$H_2NC_2H_4NHC_2H_4NH(\overset{O}{\overset{\|}{C}}C_{34}H_{62}\overset{O}{\overset{\|}{C}}NHC_2H_4NHC_2H_4NH)_nH$

The polyamidoamine can be based on reaction products of dibasic acid and polyamine, or dimer acid and polyamine, or fatty acid and polyamine.

Other suitably employable adhesion promoters include:

<u>Polyamines</u>

$\{NH-\underset{R}{\underset{|}{C}}H\}$

<u>1.) Polyethyleneimine</u>

$\{C-C-\underset{H}{\underset{|}{N}}\}$

<u>2.) Polydiallylamine</u>

<u>Polyurea</u>

$\{R-NH-CO-NH\}$

<u>Polyurethane</u>

$\{NH-CO-O\}$

<u>Polyoxazoline Hydrolyzed to Various Degrees</u>

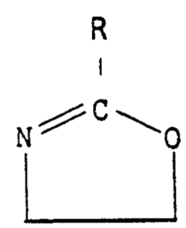

<u>Polymers from Condensation Reaction of Epichlorohydrin and polyamines</u>

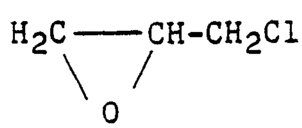

<u>Copolymers of Acrylamide and Cationic Monomers</u>

$(H_2C=CHCONH_2)$

## Poly(N-Vinylpyrrolidone) and Analogs

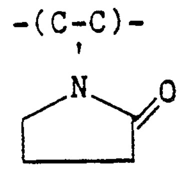

The polymeric adhesion promoter can also be a combination of the above-described compounds.

The polymeric adhesion promoter is typically incorporated by post-adding to the latex. Normally the polymeric adhesion promoter is present in the adhesive in an amount sufficient to promote adherence of the surface of a substrate to the surface of another substrate of the same or different material. Typically a sufficient amount is an amount of at least 1 weight percent and no more than 15 weight percent based upon the weight of the total latex adhesive.

## Epoxy Emulsion

The epoxy resin emulsion component is suitably any compound which possesses more than a 1,2-epoxy group. In general, the epoxy emulsion component is saturated or unsaturated aliphatic or cycloaliphatic, aromatic or heterocyclic and can be substituted or unsubstituted. The epoxy emulsions may be selected from the polyglycidyl ethers of bisphenol compounds, the polyglycidyl ethers of a novolac emulsion, and the polyglycidyl ethers of a polyglycol. Mixtures of two or more epoxy emulsions can also be used.

The preferred epoxy resin emulsions are the polyglycidyl ethers of bisphenol compounds. The polyglycidyl ethers of bisphenol A or bisphenol F have been found to be suitable. The epoxy emulsions may be formed as the reaction products of epichlorohydrin and bisphenol A or bisphenol F or derivatives thereof.

## The Preparation of the Epoxy Emulsion

The epoxy emulsion is prepared by dispersing epoxy resin in water with a surfactant. The concentration of the epoxy resin in the emulsion is typically from 90 to 95 percent. The surfactants employable to disperse the epoxy resin are typically conventional nonionic or anionic surface active agents. Nonionic surfactants include the ethylene oxide derivatives of long chain alcohols and alkyl phenols such as octyl or nonylphenol containing from 10 to 60 moles of ethylene oxide per mole of the phenol. Suitable anionic surfactants include alkyl sulfates such as lauryl sulfates and alkyl sulfonates which include the esters of sulfonated dicarboxylic acids, succinic acid for example.

The epoxy emulsion is typically present in the adhesive formulation in an amount sufficient to improve adherence of the surface of a substrate to the surface of another substrate of the same or different material. Typically, a sufficient amount is an amount of from 2 to 25 weight percent based on the total weight of the latex. Preferably the epoxy resin emulsion is present in the adhesive formulation in an amount of from 4 to 15 weight percent based on the total weight of the latex. Most preferably, the epoxy is present in the adhesive formulation in an amount of from 6 to 10 weight percent based on the total weight of the latex.

## The Preparation of the Polymeric Latex

The polymeric latex is prepared by conventional emulsion polymerization techniques. Water and a seed latex are introduced into a reactor equipped with lab pumps to deliver monomer and aqueous feeds. The reactor is purged with nitrogen and heated. Over a four hour period is added two monomer streams and a third stream containing water, aqueous surfactant sodium hydroxide and sodium persulfate. Following the addition of the monomer streams and aqueous streams, the reaction mixture is maintained at a heated temperature for one additional hour and then cooled. The latex is steam distilled to remove unreacted

monomers. A neutralent is then added to the latex to bring the pH to 10.

The neutralent chosen is dependent on the hydrophilicity or hydrophobicity of the polymeric adhesion promoter chosen. If the polymeric adhesion promoter is hydrophilic, ammonium hydroxide or other organic amines are preferred neutralents. If the polymeric adhesion promoter is hydrophobic, any base can be used to neutralize the latex such as alkali hydroxides or amines. A greater choice of neutralents exists for the adhesive containing the hydrophobic polymeric adhesion promoter because the hydrophobic polymeric adhesion promoter is thought to contribute less water sensitivity to the adhesive than the hydrophilic polymeric adhesion promoter. Therefore, if a large concentration of the adhesive is water--sensitive components, such as hydrophilic polymeric adhesion promoters or alkyl hydroxides, the adhesive is thought to lose bond strength at higher humidity levels.

## The Preparation of the Adhesive

The polymeric adhesion promoter is added to the latex while stirring until the polymeric adhesion promoter concentration reaches a desired concentration which is typically 6 percent based on latex solids. An epoxy emulsion is then added until the epoxy concentration reaches a desired concentration which is typically 6 percent based on latex solids. The adhesive is then diluted to a desired concentration which is typically 40 percent total solids.

The pot-life of the adhesive can be determined by measuring the viscosity of the adhesive formulation over time. The viscosity is measured using a Brookfield viscometer and the pot-life is considered exhausted if the adhesive gels or if the viscosity measurement is above about 250 centipoise.

## The Preparation of the Laminate

The formulated adhesive is then applied to the film and the coated film is dried. The dried coated film is then laminated to another film.

The peel adhesion for plastic film to plastic film is measured by a T-Peel test (ASTM D-1876-72) on an Instron. The humidity test is performed by enclosing the laminates in a chamber at 23 °C and 100 percent relative humidity (RH). The peel adhesion is then measured after 200 hours of exposure.

## Coagulation of the Adhesive During Processing of a Laminate

If the adhesive is used to prepare a laminate, and hard water, that is water containing greater than 150 ppm of ions, is used to clean the laminating equipment, the adhesive may coagulate. The coagulated adhesive is difficult to remove from the laminating equipment. The coagulation caused by the ions can be prevented by adding a particular surfactant to the system at any time during the process of preparing the adhesive; for example the surfactant can be added during the emulsion polymerization of the latex or after the adhesive has been formulated. The surfactant is chosen to prevent the coagulation without adversely affecting the adhesive properties of the adhesive.

Typical examples of suitable surfactants are: DOWFAX® 8390, a mixture of a disodium salt of hexadecyl(sulfophenoxy) benzenesulfonic acid, and a disodium salt of oxybis (hexadecylbenzenesulfonic acid), available from The Dow Chemical Company; Polywet® KX-4, a potassium salt of oligomers made from several functional monomers and containing a non-functional hydrocarbon end group, produced by Uniroyal Chemical; and Igepal® CO630, a nonylphenoxypoly (ethyleneoxy) ethanol available from GAF Corporation.

Typically the amount of surfactant effective to prevent coagulation will be from 0.5 to 5 weight parts based on the weight of latex solids. Preferably, the amount of surfactant effective to prevent coagulation will be from about 2 to about 4 weight parts based on the weight of the latex solids.

The following examples are intended to illustrate the invention but not to limit the scope thereof. All parts and percentages are based on dry solids weight unless otherwise indicated.

## Examples

Polymeric latex Compositions:

Latex 1: Styrene/Butadiene/Acrylic Acid (46/50/4)
Latex 2: Styrene/Butadiene/Acrylic Acid (47.5/50/2.5)
Latex 3: Sec-Butyl Acrylate/Acrylic Acid (97/3)
Latex 4: Styrene/Butadiene/Acrylic Acid (58/38/4)
Latex 5: Styrene/Butadiene/Itaconic Acid (33/65/2)

Polymeric adhesion promoters:

A. Polyamidoamine, based on condensation products of polyamines and dimer acids having an amine value of 168-182 and a viscosity of 8-15 poises (0.8-1.5 Pa•s) at 40 °C.

B. Polyamidoamine, based on condensation products of polyamine and dimer acids, having an amine value of 330-360 and a viscosity of 8-12 poises (0.8-1.2 Pa•s) at 40 °C.

C. Polyamidoamine, based on condensation products of polyamines and dimer acids, having an amine value of 330-360 and a viscosity of 7-9 poises (0.7-0.9 Pa•s) at 75 °C.

D. Polyethyleneimine, of 1200 molecular weight.

Epoxy Emulsions:

A. Epoxy emulsion based on a 50/50 blend of epoxy resin of polyglycidylethers of bisphenol A and F ((XQ82312.00) available from The Dow Chemical Company)

B. Epoxy emulsion based on polyglycidyl ethers of bisphenol compound having an equivalent weight per epoxide of 206 and a viscosity of 2.5-4 poises (0.25-0.4 Pa•s) at 25 °C (492X6213`available from Daubert Chemical Co.).

C. Epoxy emulsion based on modified polyglycidyl ether of bisphenol A with an average functionality of 3, having a weight per epoxide of 215, and Brookfield Viscosity of 10-15 poises (1-1.5 Pa•s) at 25 °C, (-(RDX80204) available from Interez, Inc.).

D. Epoxy emulsion based on modified polyglycidyl ether of Bisphenol A with an average functionality of 3, having a weight per epoxide of 205, and Brookfield Viscosity of 10 poises (1 Pa•s) at 25 °C, ((W55-5003) available from Interez, Inc.).

Example 1

Latex 1 - Styrene/Butadiene/Acrylic Acid (46/50/4)

All measurements are in dry solids parts per one hundred parts total monomers. Into a one-gallon, jacketed reactor equipped with lab pumps to deliver monomer and aqueous feeds were added 52.05 parts of deionized water, 0.01 parts of a one-percent active aqueous pentasodium diethylene triamine pentacetate solution, and a sufficient amount of seed to yield a latex polymer having an average particle size of approximately 1050Å (105 nm). The reactor was purged with nitrogen and heated to 90 °C. Then, over a four hour period was added a monomer stream containing 26.00 parts of styrene, 2.00 parts of tertiary dodecyl mercaptan, 3.00 parts of carbon tetrachloride and 50.00 parts of butadiene.

Beginning simultaneously with the start of the monomer stream was added a second monomer stream, also over a four hour period, 20.00 parts of styrene and 4.00 parts of acrylic acid.

Beginning simultaneously with the start of each of the above monomer streams was added continuously over a four hour period, 14.70 parts of deionized water, 0.50 parts of a 45 percent active aqueous solution of sodium salt of dodecylated phenyl ether, 0.14 parts of a 10 percent aqueous sodium hydroxide, and 0.70 parts of sodium persulfate. Following the addition of the monomer streams and aqueous streams, the reaction mixture was maintained at 90 °C for one additional hour and then cooled. The latex was steam distilled to remove unreacted monomers and neutralized with ammonium hydroxide to a pH of 10.

A 20 percent solution of the polymeric adhesion promoter 1 was prepared by diluting the polyamidoamine using a mixture of 55/45 isopropanol/water. The polyamidomine was added to the latex while stirring until the polyamidoamine reaches 6 percent based on solids. Epoxy emulsion A was then added until the epoxy concentration reached 10 percent based on solids. The adhesive was then diluted to

40 percent total solids using deionized water.

The formulated adhesive was then applied to the corona treated side of a coextruded polyethylene-vinyl acetate/Surlyn film using a #6 Meyer rod. The coated film was then dried in a forced air oven at 65 °C, for 3 minutes. The dried coated film was then laminated to the PVDC (polyvinylidene chloride)-coated side of a PVDC-coated OPET (oriented polyethylene terephthalate), at 95 °C at 30 PSI for 5 seconds. The dry strength of the laminate was determined using a T-peel test on an Instron instrument (ASTM D1876-2). The ends of the two laminate films (1/2" (12.7 mm) width) were secured in the jaws of the Instron and pulled apart at a peel rate of 12 inches/minute (3048 mm/minutes).

The humidity test was performed by enclosing the laminates in a chamber at 100 percent RH, and 23 °C. The peel adhesion was then measured after 200 hours of exposure.

The results of the peel test and humidity test are reported in Table I below. All of the latexes of the adhesives in Table I were made similarly as described above. Adhesive number 1 is an example of the invention, an adhesive containing a latex, a polymeric adhesion promoter and an epoxy emulsion. The comparative adhesives are not examples of the invention but are included to demonstrate the properties of example adhesives. Comparative adhesive 1A is a comparative example to demonstrate the adhesive strength of a latex-based adhesive which does not contain either a polymeric adhesion promoter or an epoxy emulsion. Comparative adhesive 1B is also a comparative example to demonstrate an adhesive containing a latex and a polymeric adhesion promoter, but no epoxy. Similarly, comparative adhesive 1C is also a comparative example to demonstrate an adhesive containing a latex and epoxy, but no polymeric adhesion promoter.

TABLE I

| Adhesive | Percent Adhesion Promoter A | Percent Epoxy A | T-Peel Force 2 Weeks in gm/in (N/m) | | Percent Retention of dry strength to wet strength |
|---|---|---|---|---|---|
| | | | Dry | Wet | |
| Example 1 | 6 | 10 | 368 (142) | 336 (129) | 91 |
| Comparative Example 1A | 0 | 0 | 430 (166) | 32 (12) | 7 |
| Comparative Example 1B | 6 | 0 | 508 (196) | 241 (93) | 59 |
| Comparative Example 1C | 0 | 10 | 272 (105) | 204 (79) | 75 |

The data shown in Table I demonstrate the humidity exposure peel strength and dry peel strength of the adhesive containing both an epoxy and polymeric adhesion promoter with the latex, which is higher than those adhesives without both an epoxy and polymeric adhesion promoter present.

Example 2

The results of a similar peel test and humidity test based on Latex 2 are reported in Table II below. The adhesive based on Latex 2 of Table II was made similarly as described above in Example 1; however, the latex was neutralized with potassium hydroxide to a pH of 9.75. The adhesives and the laminates of Example 2 were also made similarly to Example 1. Example 2 -adhesive 2 of Table II is an example of the invention, an adhesive containing a latex, a polymeric adhesion promoter and an epoxy resin emulsion. Latex 2 was prepared similarly to Example 1 with 47.5 parts styrene, 50 parts butadiene, and 2.5 parts acrylic acid with 2.3 parts tertiary dodecyl mercaptan. The epoxy of adhesive 2 was epoxy B. The polymeric adhesion promoter was polymeric adhesion promoter B. Comparative adhesive 2A, based on Latex 2, is a comparative example to demonstrate the adhesive strength of a latex-based adhesive which does not contain either a polymeric adhesion promoter or an epoxy emulsion. Comparative adhesive 2B based on Latex 2, is also a comparative example to demonstrate an adhesive containing a latex and a polymeric adhesion promoter, but no epoxy. Similarly, comparative adhesive 2C based on Latex 2, is also a comparative example to demonstrate an adhesive containing a latex and epoxy, but no polymeric adhesion promoter.

TABLE II

| Example | Percent Adhesion Promoter B | Percent Epoxy B | Green Strength in gm/in (N/M) | Dry Strength in gm/in (N/M) | Wet Strength in gm/in (N/M) | Percent Retention |
|---|---|---|---|---|---|---|
| 2 | 6 | 6 | 495 (191) | 500 (193) | 515 (198) | 103 |
| Comparative Example 2A | 0 | 0 | 477 (184) | 410 (158) | 0 | 0 |
| Comparative Example 2B | 6 | 0 | 516 (199) | 428 (165) | 19 (7) | 4 |
| Comparative Example 2C | 0 | 6 | 538 (207) | 479 (184) | 0 | 0 |

The data from Table II illustrate the increase in wet strength and increase in percent retention of an adhesive prepared with both an epoxy and a polymeric adhesion promoter added to a latex.

Examples 3 and 4

Example 3 was an adhesive prepared with Latex 3 which was a latex having 97 parts sec-butyl acrylate and 3 parts acrylic acid neutralized to a pH of 9.75 with potassium hydroxide. The epoxy of the adhesive using Latex 3 was epoxy B, at 6 percent solids and the polymeric adhesion promoter of the adhesive using Latex 3 was 6 percent solids of polymeric adhesion promoter B.

Example 4 was an adhesive prepared with Latex 4 which was a latex having 58 parts styrene, 38 parts butadiene and 4 parts acrylic acid. The latex was neutralized to a pH of 9.75 with potassium hydroxide. The epoxy of the adhesive using Latex 4 was 6 percent solids of epoxy B and the polymeric adhesion promoter of the adhesive using Latex 5 was 6 percent solids of polymeric adhesion promoter B.

The data in Table 111 illustrate the strengths of laminates prepared from adhesives using a different latex with the same neutralent, polymeric adhesion promoter and epoxy. The percent wet and dry strengths and percent retention remained at acceptable levels. The laminates of Table 111 were prepared similarly to those in Example 1.

TABLE III

| Example Adhesive | Green Strength in gm/in (N/m) | Dry Strength in gm/in (N/m) | Wet Strength in gm/in (N/m) | Percent Retention |
|---|---|---|---|---|
| 1 | --- | 368 (142) | 366 (129) | 91 |
| 2 | 495 (191) | 500 (193) | 575 (221) | 103 |
| 3 | 428 (165) | 544 (209) | 461 (177) | 85 |
| 4 | 358 (138) | 460 (177) | 287 (110) | 62 |

Examples 5 and 6

The data in Table IV exemplify the effects of changing polymeric adhesion promoter and epoxy emulsion on the wet and dry strength and percent retention of the adhesives, all of which remained at high levels. The laminates of Table IV were prepared similarly to those in Example 1.

Example 5 was an adhesive prepared with 90 percent Latex 4 and 10 percent of Latex 5 which was 33 parts styrene, 65 parts butadiene and 2 parts Itaconic acid. The epoxy of the adhesive of Example 5 was 6 percent solids of epoxy D, and the polymeric adhesion promoter of the adhesive of Example 5 was 4 percent solids of polymeric adhesion promoter D.

Example 6 was an adhesive prepared with Latex 2. The epoxy of the adhesive of Example 8 was epoxy C, at 6 percent solids and the polymeric adhesion promoter of the adhesive of Example 6 was 6 percent solids of polymeric adhesion promoter C.

TABLE IV

| Example | Epoxy | Adhesion Promoter | Dry Strength in gm/in (N/M) | Wet Strength in gm/in (N/M) | Percent Retention |
|---|---|---|---|---|---|
| 1 | A | A | 368 (142) | 336 (129) | 91 |
| 2 | B | B | 500 (193) | 515 (198) | 103 |
| 5 | D | D | 418 (161) | 454 (175) | 109 |
| 6 | C | C | 599 (231) | 336 (129) | 73 |

The data in Table V illustrate the effect of changing the latex neutralent on the strength of the adhesive. The adhesive of Comparative Example 5 was prepared similarly to the adhesive of Example 5 except the neutralent for Latex 4 was sodium hydroxide and not ammonium hydroxide. Example 7 was prepared

similarly to Adhesive 2 except the latex of the adhesive was neutralized with sodium hydroxide.

The Table shows a more hydrophilic polymeric adhesion promoter like polyethyleneimine requires a less hydrophilic neutralent like ammonium hydroxide to impart a high percent retention to the adhesive. If the polymeric adhesion promoter is less hydrophilic such as polyamidoamine polymeric adhesion promoter B (of Examples 2 and 7), a neutralent such as sodium hydroxide or potassium hydroxide can be used without sacrificing the high percent retention of peel strength.

Comparative Example 5 illustrates a decrease in wet strength and, therefore, percent retention because Latex 4 was neutralized with sodium hydroxide and the polymeric adhesion promoter was the more hydrophilic polyethyleneimine. Both the sodium hydroxide and the polyethyleneimine are highly water sensitive which increases the water sensitivity of the adhesive, thereby reducing the wet strength of the laminate bond.

TABLE V

| Example | Dry Strength in gm/in (N/m) | Wet Strength in gm/in (N/m) | Percent Retention |
|---|---|---|---|
| 2 | 500 (193) | 515 (198) | 103 |
| 5 | 418 (161) | 454 (175) | 109 |
| Comparative Example 5 | 1500 (578) | 0 | 0 |
| 7 | 522 (201) | 512 (197) | 98 |

Pot-life of the Adhesives of Examples 2 - 4

The viscosity measurement, with time, of the adhesive formulation can be used to determine the pot-life of the adhesive. The viscosity is measured by using a Brookfield viscometer set with a #3 spindle at 100 rpm.

The following Table VI demonstrates viscosity data for various types of adhesives of Examples 2, 3 and 4. The latexes and adhesives were prepared similarly to those prepared in Example 1.

Adcote® TT660 is not an example of the invention but is an acrylic-based latex adhesive available from Morton Thiokol.

The viscosity of each adhesive shown in Table VI, indicates that the latex adhesive containing both the polymeric adhesion promoter and the epoxy has a greater pot-life than the Adcote® TT660 adhesive.

TABLE VI

| Example | Viscosity, cps (Pa•s) | | | |
|---|---|---|---|---|
| | 6 Hrs. | 22 Hrs. | 48 Hrs. | 960 Hrs. |
| 2 | 32 (0.032) | 32 (0.032) | 30 (0.03) | 40 (0.04) |
| 3 | 30 (0.03) | 30 (0.03) | 30 (0.03) | |
| 4 | 65 (0.065) | 50 (0.05) | 36 (0.036) | |
| Adcote TT660* | 57 (0.057) | 264 (0.264) | gel | gel |

*Not an example of the invention.

The viscosity data in the above Table VI illustrate those adhesives prepared with both a polymeric adhesion promoter and epoxy did not gel as did the commercially available latex adhesive. The data indicate a greater pot-life for those adhesives prepared with the present invention, thus allowing for a greater length of time to use the adhesive for laminating.

Example 7 - The addition of surfactant to the adhesive to prevent coagulation of the latex in water containing ions

Latex 2 was prepared similarly to the latex of Example 1, however, the latex was neutralized with potassium hydroxide to a pH of 10. Two parts, based on latex solids, of Dowfax® 8390 was added to the latex and the mixture was stirred. A 15 percent aqueous dispersion of adhesion promoter C was prepared and was added to the latex and surfactant until the adhesion promoter reached 6.0 percent based on solids. Epoxy B was then added until the epoxy concentration reached 6 percent based on solids.

The adhesive was tested for hard water stability by the following method:

To 0.2 gm of the adhesive plus surfactant which was aged for 48 hours, was added 20 $cm^3$ of water containing 150 ppm of divalent ions such as calcium. The mixture was hand shaken for 100 shakes and was then examined for coagulation. A comparative example was prepared which contained no Dowfax® 8390. The data which demonstrate the coagulation inhibition by using the surfactant, are shown in the following table.

TABLE VII

| Example | Level of Dowfax® 8390 Post-Added Based on Latex Solids | Stability of Adhesive System Toward Hard Water Test |
|---|---|---|
| Comparative Example 7 (no surfactant) | 0 | highly coagulated |
| 7 | 2 | not coagulated |

Evaluation of Peel Strength of the Adhesive Plus Surfactant in a Laminate

The adhesive plus surfactant was then used to prepare a laminate by adjusting the adhesive to 30 percent solids with a 50/50 mixture of isopropanol and water. The adhesive was applied to the PVDC (polyvinylidene chloride)-coated side of a PVDC-coated OPET (oriented polyethylene terephthalate) by drawing it down the film using a #3 Meyer rod. The coated film was then dried in a forced air oven for approximately three minutes at 65° C. The film was then laminated to the corona-treated side of a coextruded polyethylenevinyl acetate/Surlyn film at 95° C at 30 psi (207 kPa) for 5 seconds. The laminates were cut into 1/2 inch (12.7 mm) strips and the peel adhesion was determined similarly to the peel adhesion of Example 1. The humidity test was also performed similarly as in Example 1. A comparative laminate was prepared wherein the adhesive was similar to the adhesive of Example 7 however, no Dowfax® 8390 was added.

The results are indicated in the following Table. The peel strength was determined as in Example 1. The data indicate that the peel strength, both wet and dry, was maintained in the presence of the post-added surfactant compared with the comparative example.

TABLE VIII

| Example | Level of Dowfax® 8390 Post-Added Based on Latex Solids | Peel Strength in gms/in (N/m) | |
|---|---|---|---|
| | | Dry | Wet |
| Comparative Example 7 (no surfactant) | 0 | 440 (169) | 340 (131) |
| 7 | 2 | 400 (154) | 390 (150) |

## Claims

1. An adhesive formulation for substrates which provides a bond between a substrate and another substrate of the same or different material which comprises: (i) a polymeric latex; (ii) at least one polymeric adhesion promoter present in an amount sufficient to promote adherence of the surface of the substrate to the surface of another substrate of the same or different material; and (iii) an epoxy emulsion in an amount

sufficient to improve adherence of the surface of the substrate to the surface of another substrate of the same or different material under humid conditions; whereby the adhesive formulation comprising (i), (ii) and (iii) provides an increase in percent retention between dry strength and wet strength of the bond over an adhesive formulation which does not comprise (i), (ii) and (iii).

2. An adhesive as claimed in Claim 1 wherein the polymeric adhesion promoter is present in an amount of at least 1 weight percent and no more than 15 weight percent based upon the weight of the total polymeric latex adhesive; and the epoxy resin emulsion is present in an amount of from 2 to 25 weight percent, or from 4 to 15 weight percent, based on the total weight of the polymeric latex.

3. An adhesive as claimed in Claim 1 or 2 further comprising an effective amount of a surfactant whereby coagulation of the adhesive in water containing ions is inhibited.

4. An adhesive as claimed in Claim 3 wherein the surfactant is a mixture of a disodium salt of hexadecyl(sulfophenoxy) benzenesulfonic acid, and a disodium salt of oxybis (hexadecylbenzenesulfonic acid); a potassium salt of oligomers made from several functional monomers and containing a non-functional hydrocarbon end group; or a nonylphenoxypoly (ethyleneoxy) ethanol; and is present in an amount of from 0.5 to 5.0 weight percent of latex solids.

5. An adhesive as claimed in Claim 1 - 4 wherein the polymeric adhesion promoter is polyamidoamine; polyamines; polydiallylamine; polyurea; polyurethane; hydrolyzed polyoxazoline; polymers from condensation reactions of epichlorohydrin and polyamines; copolymers of acrylamide; or poly(N-vinylpyrrolidone); the epoxy resin is a polyglycidyl ether of a bisphenol compound; a polyglycidyl ether of a novolac emulsion; or a polyglycidyl ether of a polyglycol; and the polymeric latex monomer is a monovinyl aromatic monomer; an aliphatic conjugated diene monomer; an acrylate monomer; a vinylidene halide or vinyl halide monomer; a vinyl ester of a carboxylic acid containing from 1 to 18 carbon atoms, such as vinyl acetate or vinyl stearate; methacrylonitrile or acrylonitrile; or a monoethylenically unsaturated carboxylic acid monomer.

6. A laminate structure which comprises a substrate laminated to another substrate of the same or different material using an adhesive to provide a bond between the substrates which comprises (i) a polymeric latex; (ii) at least one polymeric adhesion promoter present in an amount sufficient to promote adherence of the surface of the substrate to the surface of another substrate of the same or different material; and (iii) an epoxy emulsion in an amount sufficient to improve adherence of the surface of the substrate in humid conditions to the surface of another substrate of the same or different material; whereby the adhesive formulation comprising (i), (ii) and (iii) provides an increase in percent retention between dry strength and wet strength of the bond over a formulation which does not comprise (i), (ii) and (iii).

7. A laminate structure as claimed in Claim 6 wherein the polymeric adhesion promoter is present in an amount of at least 1 weight percent and no more than 15 weight percent based upon the weight of the total polymeric latex adhesive and the epoxy resin emulsion is present in an amount of from 2 to 25 weight percent, or from 4 to 15 weight percent, based on the total weight of the polymeric latex.

8. A laminate structure as claimed in Claim 6 or 7 wherein the polymeric adhesion promoter is a polyamidoamine; a polyamine; a polydiallylamine; a polyurea; a polyurethane; a hydrolyzed polyoxazoline; a polymer from condensation reactions of epichlorohydrin and polyamines; a copolymer of acrylamide; or a poly(N-vinylpyrrolidone); the epoxy resin is a polyglycidyl ether of a bisphenol compound; a polyglycidyl ether of a novolac emulsion; or a polyglycidyl ether of a polyglycol and the polymeric latex monomer is a monovinyl aromatic monomer; an aliphatic conjugated diene monomer; an acrylate monomer; a vinylidene halide or vinyl halide monomer; a vinyl ester of a carboxylic acid containing from 1 to 18 carbon atoms; such as vinyl acetate or vinyl stearate; methacrylonitrile; acrylonitrile; or a monoethylenically unsaturated carboxylic acid monomer.

9. A laminate structure as claimed in Claim 6 - 8 further comprising an effective amount of a surfactant whereby coagulation of the adhesive in water containing ions is inhibited.

10. A laminate structure as claimed in Claim 9 wherein the surfactant is a mixture of a disodium salt of hexadecyl(sulfophenoxy) benzenesulfonic acid and a disodium salt of oxybis (hexadecylbenzenesulfonic acid); a potassium salt of oligomers made from several functional monomers and containing a non-functional hydrocarbon end group; or a nonylphenoxypoly (ethyleneoxy) ethanol, and is present in an amount of from 0.5 to 5.0 weight percent of latex solids.

11. A process for preparing a laminate structure which comprises;

(a) providing a substrate having at least one major surface;

(b) applying to the major surface a latex adhesive comprising an adhesive as claimed in any one of Claims 1 to 5; and

(c) laminating the adhesive-coated substrate to another substrate of the same or different material.

European Patent Office

# EUROPEAN SEARCH REPORT

Application Number

EP 89 20 0751

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 056 452 (NATIONAL STARCH AND CHEMICAL CORP.)<br>* Whole document *<br>--- | 1,3,6 | C 09 J 3/12<br>B 32 B 27/18 |
| X | GB-A-2 101 141 (DENKI KAGAKU KOGYO K.K.)<br>* Claims 1-11; pages 14-23 *<br>----- | 1,2,6-8 | |
| | | | TECHNICAL FIELDS SEARCHED (Int. Cl.4) |
| | | | C 09 J<br>C 08 L |

The present search report has been drawn up for all claims

| Place of search | Date of completion of the search | Examiner |
|---|---|---|
| THE HAGUE | 30-06-1989 | SCHUELER D.H.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)